# EUROPÄISCHE PATENTANMELDUNG

(11) **EP 4 435 604 A1**
(43) Veröffentlichungstag der Anmeldung: **25.09.2024**
(21) Anmeldenummer: 24160916.3
(22) Anmeldetag: 01.03.2024
(51) Int. Cl.: G06F 11/07, B60W 50/029, G06F 11/30, G06F 11/34, G06F 11/20

(54) **VERFAHREN UND KOMPENSATIONSVORRICHTUNG FÜR EIN FAHRZEUG ZUR KOMPENSATION EINER AUFTRETENDEN LEISTUNGSMINDERUNG EINER RECHENEINRICHTUNG EINES FAHRZEUGS**

(30) Priorität: 21.03.2023 DE 102023202522
(71) Anmelder: VOLKSWAGEN AG, 38440 Wolfsburg (DE)
(72) Erfinder: Lutz, Malte, 38126 Braunschweig (DE); Behmann, Nicolai, 30419 Hannover (DE)

(57) **Zusammenfassung**

Verfahren zur Kompensation einer auftretenden Leistungsminderung einer, insbesondere zentralen, Recheneinrichtung (10) eines Fahrzeugs (1), mithilfe derer eine anfallende Fahrzeugfunktion zur Erfüllung einer Fahrzeugfunktionsaufgabe wenigstens teilweise automatisch und bevorzugt vollautomatisch ausführbar ist und/oder ausgeführt wird und welche wenigstens eine Recheneinheit (R1, R2) und bevorzugt eine Vielzahl von Recheneinheiten (R1, R2) umfasst und zur Datenverarbeitung von mittels einer Vielzahl von Sensoreinrichtungen (20) des Fahrzeugs (1) ermittelten Sensordaten geeignet und bestimmt ist, und welche auf Grundlage der Sensordaten zur Ermittlung wenigstens einer Steuergröße zur, wenigstens teilweisen automatischen und bevorzugten vollautomatischen, Ausführung der Fahrzeugfunktion, insbesondere Fahrfunktion, des Fahrzeugs (1) geeignet und bestimmt ist, umfassend:
- Überwachen einer Leistungsfähigkeit der Recheneinrichtung (10) zur Feststellung einer auftretenden Leistungsminderung der Recheneinrichtung (10) und im Falle einer auftretenden Leistungsminderung, Ermittlung wenigstens einer Leistungsgröße, welche charakteristisch ist für eine noch vorhandene Leistungsfähigkeit der Recheneinrichtung (10), und Ermittlung wenigstens einer Fehlergröße, welche charakteristisch ist für eine, die Leistungsminderung der Recheneinrichtung (10) betreffende Fehlerart;
- Bei Gefährdung der Erfüllung der Fahrzeugfunktionsaufgabe, Ermittlung wenigstens einer Kompensationsfunktion zur ersatzweisen Ausführung anstelle der Fahrzeugfunktion auf Grundlage der wenigstens einen ermittelten Leistungsgröße und/oder der wenigstens einen Fehlergröße und auf Grundlage der zu erfüllenden Fahrzeugfunktionsaufgabe.

## Beschreibung

Die vorliegende Erfindung bezieht sich auf ein Verfahren und eine Kompensationsvorrichtung für ein Fahrzeug zur Kompensation einer auftretenden Leistungsminderung einer, insbesondere zentralen, Recheneinrichtung eines Fahrzeugs, mithilfe derer eine anfallende Fahrzeugfunktion zur Erfüllung einer Fahrzeugfunktionsaufgabe wenigstens teilweise automatisch und bevorzugt vollautomatisch ausführbar ist und/oder ausgeführt wird.

Typischerweise zeichnen sich heutige sogenannte "Self-Driving Systems" (SDS) durch redundant ausgeführte zentrale Recheneinheiten aus. Dem Stand der Technik entsprechend wird häufig ein leistungsstarker Hauptrechner durch eine "einfachere" BackUp-Einheit ergänzt. Während der Hauptrechner überwiegend für die Ausführung der Fahraufgabe verantwortlich ist, überwacht die BackUp-Einheit diesen kontinuierlich und stellt oft für den Fehlerfall einzig eingeschränkte Funktionalitäten bereit (z.B. sicheres Anhalten auf der eigenen Fahrspur). Es ist jedoch auch denkbar, dass die BackUp-Einheit den vollen Funktionsumfang des Hauptrechners abbilden kann und entsprechend leistungsstärker ausgeführt ist.

Größtes Manko dieses Konzeptes ist, dass im Fall einer normal funktionierenden Hauptrecheneinheit der BackUp-Rechner größtenteils ungenutzt und/oder weit unter seinen technischen Möglichkeiten eingesetzt wird. Dies bedeutet, dass im physischen Sinn sowohl Bauraum und Ressourcen verschwendet werden sowie zur Verfügung stehende Rechenkapazität über weite Teile der Lebensdauer nicht beziehungsweise nur selten vollständig ausgenutzt wird.

Aus der US 2021/0331700 A1 ist ein System und ein Verfahren zur Bestimmung einer Risikoverteilung basierend auf Erfassungszonen, die von einer Vielzahl von Sensoren eines autonomen Fahrzeugs abgedeckt werden. Darin wird in einer Ausführungsform ein Sicherheits-Redundanzsystem für autonomes Fahren (ADS Abkürzung für "autonomous driving system") offenbart. Das System kann eine vorgegebene Systemfähigkeit eines leistungsorientierten primären autonomen Fahrsystems (ADS) für dynamische Fahraufgaben anpassen und weist ein sicherheitsbasiertes Backup-ADS als Rückfallmöglichkeit auf. Das System kann dazu verwendet werden, um zu zeigen, wie Sensorsystemrisiken von einer mittleren Zeit zwischen Ausfällen bestimmt werden können.

Aus der US 2021/0107499 A1 ist ein Verfahren zur Verifizierung von Features für das autonome Fahren bekannt. Insbesondere bezieht sich die Druckschrift auf fortgeschritten Fahrerassistenzsysteme. Vorgeschlagen wird darin, eine aktuelle ODD (engl. Abkürzung für "Operational Design Domain") zu ermitteln. Als ODD wird darin ein Betriebsbereich verstanden, in denen das autonome Fahrsystem so ausgelegt ist, dass es darin funktionieren kann, umfassend beispielsweise geografische Beschränkungen, Fahrbahnbegrenzungen, Umweltbegrenzungen. Weiter vorgeschlagen wird, zu überprüfen, ob sich das Fahrzeug in einem ODD befindet, mit dem ein erstes und ein zweites Fahrerunterstützungsmodul kompatibel ist. In diesem Fall kann beispielsweise eine Steuerung der Fahrzeugplattform zwischen dem ersten Fahrerunterstützungsmodul und dem zweiten Fahrerunterstützungsmodul aufgeteilt werden.

Aus der US 2021/0284200 A1 ist ein Verfahren zur Bestimmung einer Fähigkeitsgrenze und eines damit verbundenen Risikos eines sicherheitsredundanten autonomen Systems in Echtzeit bekannt. Darin wird ein primäres autonomes Fahrsystem, welches für das normale autonome Fahren verantwortlich ist, und ein Backup- oder sekundäres autonomes Fahrsystem zur Übernahme der Steuerung des autonom fahrenden Fahrzeugs, wenn festgestellt wird, dass das primäre autonome Fahrsystem nicht ordnungsgemäß funktioniert. Das sekundäre autonome Fahrsystem kann eine Backup-Trajektorie planen, um das Fahrzeug in eine Sicherheitsposition zu bringen, wenn festgestellt wird, dass das primäre autonome Fahrsystem nicht ordnungsgemäß funktioniert.

Aus der WO 2022/061807 A1 ist ein Datenspeicherverfahren und eine Einrichtung hierzu bekannt. Darin werden zwei Knoten, ein Hauptknoten und ein Backup-Knoten, vorgeschlagen, wobei der zweite Knoten den ersten Knoten ersetzen kann, so dass die Verfügbarkeit des Datenspeichersystems gewährleistet werden kann.

Der vorliegenden Erfindung liegt die Aufgabe zugrunde, die aus dem Stand der Technik bekannten Nachteile zu überwinden und ein Verfahren sowie eine Kompensationsvorrichtung zur Kompensation einer auftretenden Leistungsminderung einer, insbesondere zentralen, Recheneinrichtung eines Fahrzeugs bereitzustellen, welches auch im Fehlerfall einen möglichst großen Fahrfunktionsumfang bei gleichermaßen hoher Fahrsicherheit bietet.

Die Aufgabe wird erfindungsgemäß durch die Gegenstände der unabhängigen Ansprüche gelöst. Vorteilhafte Ausführungsformen und Weiterbildungen der Erfindung sind Gegenstand der Unteransprüche.

Bei einem erfindungsgemäßen Verfahren zur Kompensation einer auftretenden Leistungsminderung einer, insbesondere zentralen, Recheneinrichtung eines Fahrzeugs, mithilfe derer eine anfallende Fahrzeugfunktion zur Erfüllung einer Fahrzeugfunktionsaufgabe wenigstens teilweise automatisch und bevorzugt vollautomatisch ausführbar ist und/oder ausgeführt wird, umfasst die, insbesondere zentrale, Recheneinrichtung wenigstens eine Recheneinheit und bevorzugt eine Vielzahl von Recheneinheiten.

Denkbar ist, dass wenigstens zwei und bevorzugt genau zwei (zentrale) Recheneinheiten vorgesehen sind. Bevorzugt ist die Recheneinrichtung als lediglich eine Komponente vorgesehen. Die beiden Recheneinheiten können dabei eine im Wesentlichen gleiche / identische Leistungsfähigkeit aufweisen.

Bevorzugt sind die (besonders bevorzugt alle) Recheneinheiten der Vielzahl von Recheneinheiten untereinander über eine Kommunikationseinrichtung zu einem Datenaustausch (mit hoher Bandbreite, bevorzugt wenigstens 10 Gbit/s) verbunden.

Bevorzugt tauschen die Recheneinheiten (besonders bevorzugt über die Kommunikationseinrichtung) den jeweiligen Zustand der Recheneinheit untereinander aus. Der jeweilige Zustand kann dabei charakteristisch sein für eine momentane Leistungsfähigkeit und insbesondere eine aufgetretene Leistungsminderung. Denkbar ist auch, dass der jeweils ausgetauschte Zustand charakteristisch ist für eine momentane Auslastung der jeweiligen Recheneinheit. Dies bietet den Vorteil, dass eine (im Wesentlichen) gleichmäßige Auslastung aller Recheneinheiten der Vielzahl von Recheneinheiten der, insbesondere zentralen, Recheneinrichtung erreicht werden kann.

Bei der Leistungsminderung kann es sich um eine im Vergleich zu einer Leistungsfähigkeit im Normalbetrieb verringerten Leistungsfähigkeit handeln. Daneben kann es sich auch um einen Ausfall (wenigstens) einer Recheneinheit der (zentralen) Recheneinrichtung handeln.

Bevorzugt ist die Recheneinheit und besonders bevorzugt ist die Vielzahl an Recheneinheiten ausgeführt als (einzelnes oder mehrere) physikalische(s) Steuergerät(e), als (einzelne oder mehrere) physikalische Chips innerhalb eines Steuergeräts und/oder als einzelne Prozessoren oder Chiplets innerhalb eines Chips.

Die Vielzahl von Recheneinheiten kann dabei als ein in der Gesamtheit (einstückiges) Bauteil in dem Fahrzeug verbaut sein. Denkbar ist aber auch, dass die Recheneinheiten voneinander beabstandet in verschiedenen Bereichen des Fahrzeugs verbaut sind. Denkbar wäre beispielsweise, dass wenigstens eine Recheneinheit der Recheneinrichtung in einem vorderen Bereich des Fahrzeugs angeordnet ist, während wenigstens eine Recheneinheit der Recheneinrichtung in einem hinteren Bereich des Fahrzeugs angeordnet ist. Dies bietet den Vorteil, dass etwa im Falle einer in Folge eines Unfalls nur lokalen Beschädigung des Fahrzeugs das Risiko einer Beschädigung der gesamten Vielzahl von Recheneinheiten reduziert wird. Durch die Beabstandung der jeweiligen Recheneinheiten kann vorteilhaft eine Art mechanischer Schutz erreicht werden.

Bevorzugt ist allerdings eine Anordnung der (bevorzugt aller) Recheneinheiten der Vielzahl an Recheneinheiten der Recheneinrichtungen möglichst nah beieinander. Vorteilhaft kann hierdurch eine sich aus einem Datenaustausch zwischen den Recheneinheiten ergebende Latenz(-Zeit) möglichst weitgehend verringert werden.

Bevorzugt ist die Recheneinrichtung zur Datenverarbeitung von mittels einer Vielzahl von Sensoreinrichtungen des Fahrzeugs ermittelten Sensordaten geeignet und bestimmt. Bevorzugt handelt es sich bei wenigstens einer und bevorzugt bei mehreren Sensoreinrichtungen des Fahrzeugs um Sensoreinrichtungen zur Erfassung des Fahrzeugumfelds. Die Erfassung bzw. Ermittlung der Sensordaten und/oder die Datenverarbeitung erfolgt dabei bevorzugt in Echtzeit. Die Sensoreinrichtungen des Fahrzeugs erfassen dabei Roh-Sensordaten, welche entweder unverarbeitet oder vorverarbeitet als Sensordaten, zur Datenverarbeitung an die (insbesondere zentrale Recheneinrichtung) übermittelt werden.

Dabei ist die (insbesondere zentrale) Recheneinrichtung auf Grundlage der Sensordaten zur Ermittlung wenigstens einer Steuergröße zur, wenigstens teilweisen automatischen und bevorzugten vollautomatischen, Ausführung der Fahrzeugfunktion, insbesondere Fahrfunktion, des Fahrzeugs geeignet und bestimmt.

Bevorzugt kann die in Bezug auf die (jeweils) anfallende Fahrzeugfunktion vorzunehmende Ermittlung der Steuergröße und/oder vorzunehmende Datenverarbeitung der Sensordaten mittels einer (einzigen) Recheneinheit erfolgen. Denkbar ist aber auch, dass die vorzunehmende Datenverarbeitung der Sensordaten und/oder Ermittlung der Steuergröße derart erfolgt, dass (über alle Recheneinheiten der Recheneinrichtung hinweg) die (Rechen-)Auslastung aller Recheneinheiten möglichst gleichverteilt ist.

Bevorzugt handelt es sich bei der Fahrzeugfunktion um eine innerhalb eines autonomen Fahrsystems (Self-Driving-System) des Fahrzeugs ausgeführte Fahrzeugfunktion. Beispielsweise kann es sich bei der Fahrfunktion um eine Längs- und/oder Querführung des Fahrzeugs (entlang einer vorgegebenen und/oder ermittelten Trajektorie) handeln. Bei der Fahrzeugfunktion kann es sich auch um eine Trajektorien-Ermittlung handeln, welche bevorzugt zur (wenigstens teilweisen und bevorzugt vollautomatischen) Fahrzeugführung entlang der ermittelten Trajektorie vorgesehen ist und/oder verwendet wird.

Das erfindungsgemäße Verfahren umfasst ein Überwachen einer Leistungsfähigkeit der Recheneinrichtung zur Feststellung einer auftretenden Leistungsminderung der Recheneinrichtung. Bevorzugt wird die Überwachung durchgeführt von einer (insbesondere Prozessor-basierten) Überwachungseinheit. Die Überwachung kann beispielsweise durch Überwachungsfunktionen erfolgen, welche serienmäßig in (speziellen) Chips bereitgestellt werden.

Das erfindungsgemäße Verfahren umfasst, dass im Falle einer auftretenden Leistungsminderung (etwa einer Recheneinheit der Recheneinrichtung), wenigstens eine Leistungsgröße ermittelt wird, welche charakteristisch ist für eine noch vorhandene Leistungsfähigkeit der Recheneinrichtung, und dass bevorzugt wenigstens eine Fehlergröße ermittelt wird, welche charakteristisch ist für eine, die Leistungsminderung der Recheneinrichtung betreffende, insbesondere bewirkende und/oder verursachende und/oder beeinflussende, Fehlerart.

Bevorzugt wird für jede Recheneinheit der Recheneinrichtung, bei welcher eine Leistungsminderung auftritt, wenigstens eine Leistungsgröße und/oder Fehlergröße ermittelt.

Weiterhin umfasst das erfindungsgemäße Verfahren, dass bei Gefährdung der Erfüllung der Fahrzeugfunktionsaufgabe, wenigstens eine Kompensationsfunktion, bevorzugt zur ersatzweisen Ausführung anstelle der Fahrzeugfunktion, auf Grundlage der wenigstens einen ermittelten Leistungsgröße und/oder der wenigstens einen Fehlergröße und auf Grundlage der zu erfüllenden Fahrzeugfunktionsaufgabe ermittelt wird.

Mit anderen Worten werden bei einer auftretenden Leistungsminderung wenigstens einer Recheneinheit der Recheneinrichtung die noch verfügbaren Ressourcen (an möglicher Rechenleistung) ermittelt und in Abhängigkeit dieser sowie in Abhängigkeit der Art des zur Leistungsminderung führenden Fehlertyps eine Kompensationsmethode entworfen, welche unter Berücksichtigung der verfügbaren Ressourcen zu einem Erreichen der (ursprünglichen) anfallenden Fahrzeugfunktionsaufgabe führen kann oder einer solchen möglichst nahekommt.

Handelt es sich bei der Fahrzeugfunktion beispielsweise um eine Fahrfunktion, in welcher das Fahrzeug entlang einer vorgegebenen (etwa ermittelten) Trajektorie zu einem vorgegebenen Fahrziel geführt werden soll, kann (im Fehlerfall) bei festgestellter Leistungsminderung ermittelt werden, ob die Fahrzeugfunktion auch mittels der noch verfügbaren Ressourcen (auf Grundlage der ermittelten Leistungsgrößen) noch bei Wahrung (insbesondere Gewährleistung und/oder Sicherstellung) der Fahrzeugsicherheit ausführbar ist.

Kann keine ausreichende Fahrzeugsicherheit mehr gewahrt werden, wird bevorzugt eine Kompensationsfunktion ermittelt, welche unter Berücksichtigung der noch verfügbaren (eingeschränkten) Ressourcen bzw. Leistungsfähigkeit der Recheneinrichtung (auf Grundlage der ermittelten Leistungsgröße(n)) das vorgegebene Fahrziel erreicht (bzw. hierfür geeignet und bestimmt ist). Denkbar ist, dass eine Kompensations-Trajektorie ermittelt wird (insbesondere von der Recheneinrichtung), welche von der für die Ausführung der Fahrzeugfunktion ermittelten Trajektorie abweicht und welche derart ermittelt ist, dass zur Fahrzeugführung entlang dieser Kompensations-Trajektorie eine reduzierte Leistungsfähigkeit bzw. Rechenkapazität der Recheneinrichtung erforderlich ist. Insbesondere ist die Kompensations-Trajektorie derart in Abhängigkeit der ermittelte(n) Leistungsgröße gewählt, dass die noch verbleibende (verminderte) Leistungsfähigkeit der Recheneinrichtung für die Ausführung der Fahraufgabe (hier Führung des Fahrzeugs entlang der Kompensations-Trajektorie) ausreichend ist.

Denkbar ist auch, dass anstelle des vorgegebenen Fahrziels ein Ersatzziel ermittelt und/oder vorgegeben wird. So könnte es sich dem Ersatzziel um ein neues Fahrziel wie eine Werkstätte und/oder einen Service-Hub und/oder ein Zuhause des Nutzers des Fahrzeugs und/oder ein Wechselziel handeln, welches etwa eine Möglichkeit zum Wechseln auf ein anderes Fahrzeug und/oder zur Inanspruchnahme einer anderen Mobilitätsdienstleistung bietet.

Bevorzugt wird das Fahrziel allerdings nicht (wesentlich) verändert. So kann beispielsweise das Fahrziel bevorzugt lediglich innerhalb eines (vorgegebenen und/oder vorgebbaren) Umkreises von 5 km, bevorzugt 1 km, bevorzugt 500 m, bevorzugt 200 m, bevorzugt 100 m und besonders bevorzugt 25 m in Bezug auf das ursprüngliche Fahrziel verändert werden. Dies bietet den Vorteil, dass im Vergleich zum Stand der Technik kein Nothalt durchgeführt wird, sondern eine derartige Kompensationsfunktion ermittelt wird, dass die Erfüllung der angefallenen Fahrzeugfunktion (dennoch) realisierbar bleibt - wenn auch gegebenenfalls unter Inkaufnahme etwa einer erhöhten Fahrdauer, Wahl einer anderen Trajektorie oder dergleichen.

Bevorzugt ermittelt die (insbesondere zentrale) Recheneinrichtung wenigstens eine Steuergröße zur Ausführung der wenigstens einen (und bevorzugt jeder) Kompensationsfunktion. Bevorzugt stellt die (insbesondere zentrale) Recheneinrichtung die ermittelte, wenigstens eine Steuergröße einer Steuereinrichtung des Fahrzeugs zur Durchführung der Kompensationsfunktion bereit, insbesondere zur Ansteuerung von zur Durchführung der Kompensationsfunktion bestimmten Aktoren und/oder Motoren und dergleichen.

Bevorzugt ermittelt die (insbesondere zentrale) Recheneinrichtung wenigstens eine für die (zu ermittelnde und/oder ermittelte) Kompensationsfunktion charakteristische Kompensationsgröße, wie beispielsweise eine Kompensationstrajektorie und/oder ein abgeändertes Ersatzziel einer Fahraufgabe. Bevorzugt erfolgt die Ermittlung der Kompensationsgröße auf Grundlage der wenigstens einen ermittelten Leistungsgröße und/oder Fehlerart.

Bevorzugt dient die (gesamte) Recheneinrichtung sowohl als zentrale Verarbeitungseinheit (insbesondere eines Self-Driving-Systems) als auch als (integrierter) Backup-Rechner für die zentrale Verarbeitungseinheit.

Bevorzugt weist das Fahrzeug neben der (gesamten) Recheneinrichtung (aufweisend eine Vielzahl von Recheneinheiten) keine weitere Recheneinheit mehr auf, welche als BackUp für die von der Recheneinrichtung durchzuführenden Datenverarbeitungen der Sensordaten und/oder durchzuführenden Ermittlung der wenigstens einen Steuergröße zur wenigstens teilweisen automatischen und bevorzugten vollautomatischen, Ausführung der Fahrzeugfunktion, insbesondere Fahrfunktion, des Fahrzeugs geeignet und bestimmt ist.

Mit anderen Worten gibt es bevorzugt in dem Fahrzeug neben der Recheneinrichtung keine weitere Recheneinheit mehr, welche zur Datenverarbeitung von mittels einer Vielzahl von Sensoreinrichtungen des Fahrzeugs ermittelten Sensordaten geeignet und bestimmt ist, und/oder welche auf Grundlage der Sensordaten zur Ermittlung der wenigstens einen Steuergröße zur, wenigstens teilweisen automatischen und bevorzugten vollautomatischen, Ausführung der Fahrzeugfunktion, insbesondere Fahrfunktion, des Fahrzeugs geeignet und bestimmt ist.

Bevorzugt ist die Gesamtleistungsfähigkeit der Recheneinrichtung derart gewählt, dass sie die maximale Leistungsfähigkeit der Recheneinrichtung, welche zur Durchführung aller in einer vorgegebenen ODD (engl. Abkürzung für "Operational Design Domain") anfallenden, von der Recheneinrichtung (in einem insbesondere von einem OEM vorgegebenen Normalbetrieb) durchzuführenden Fahrzeugfunktionsaufgaben erforderlich ist, um mehr als 20%, bevorzugt um (insbesondere wenigstens) 25% und besonders bevorzugt um (wenigstens) 30% übersteigt.

Bevorzugt ist die Gesamtleistungsfähigkeit der Recheneinrichtung derart gewählt, dass sie die maximale Leistungsfähigkeit der Recheneinrichtung, welche zur Durchführung aller in einer vorgegebenen ODD (Operational Design Domain) anfallenden, von der Recheneinrichtung (in einem insbesondere von einem OEM vorgegebenen Normalbetrieb) durchzuführenden Fahrzeugfunktionsaufgaben erforderlich ist, um nicht mehr als 70%, bevorzugt um nicht mehr als 50%, bevorzugt um nicht mehr als 40% und besonders bevorzugt um nicht mehr als 30% übersteigt.

Dies bietet den Vorteil, dass im Normalfall eine hohe und gleichmäßige Rechnerauslastung erreicht werden kann und weiterhin im Normallfall keine Ressourcenverschwendung durch ein "mitlaufendes BackUp" erzeugt wird. Hierdurch ergeben sich vorteilhaft eine Kosteneinsparung, eine Rohstoffeinsparung sowie Package-Vorteile und dergleichen.

Im Fehlerfall (insbesondere bei festgestellter Leistungsminderung der Recheneinrichtung) ergibt sich durch das vorgeschlagene Verfahren vorteilhaft eine deutlich erweiterte ODD (Operational Design Domain), also ein deutlich größerer befahrbarer Raum und/oder Fahrprofil und dergleichen, gegenüber einem klassischem "mini BackUp" aus dem Stand der Technik.

Mit anderen Worten ist insbesondere ein Kern der Erfindung in diesem Zusammenhang die Entwicklung einer kombinierten Haupt- und BackUp-Rechner-Einheit. Diese Einheit kann sowohl in einem Gerät als auch in mehreren Geräten welche mit hoher Bandbreite (bevorzugt mindestens 5Gbit/s, besonders bevorzugt mindestens 8 Gbit/s und besonders bevorzugt mindestens 10Gbit/s) verbunden sind umgesetzt sein. Zur Erläuterung der Funktionsweise wird im Folgenden sowohl der Normalbetrieb als auch der Fehlerfall in einer bevorzugten Ausführungsform betrachtet.

### Normalbetrieb:

Die kombinierte Recheneinheit (Recheneinrichtung) hat bevorzugt ganzheitlich ausreichend Rechenleistung zur Verfügung um alle in einer spezifischen ODD (Operational Design Domain) anfallenden Fahraufgaben uneingeschränkt auszuführen.

Bevorzugt sind Haupt- und BackUp-Rechner im Kern nicht als solche zu identifizieren, sondern arbeiten in Kombination alle anfallenden (Fahrzeug-)Aufgaben ab (z.B.
Sensordatenauswertung, Berechnung Trajektorie, Vorgabe Steuerung Richtung Fahrzeug). Die Auslastung der Komponenten ist hoch und gleichverteilt. Ressourcen werden nicht verschwendet.

### Fehlerfall:

Beliebige Fehlerarten (Ausfall Elektronikkomponenten, Ausfall Sensoren/Wegfall Sensorsignale, teilweise Ausfall Schnittstelle zu Fahrzeug) werden derart durch die kombinierte Recheneinheit (insbesondere durch die Recheneinrichtung) beachtet, dass die jeweilige komplementäre Hardware weiterhin einen sicheren Fahrzustand gewährleisten kann.

Im Gegensatz zu klassischen BackUp-Konzepten (Stand der Technik) steht dabei zwar ein eingeschränkter Funktionsumfang zur Verfügung, dieser übertrifft vorteilhaft jenen eines reinen BackUp-Rechners jedoch deutlich.

Es ist vorstellbar, dass zum Beispiel die ODD derart eingeschränkt wird, dass unter Berücksichtigung neuer Maximalgeschwindigkeiten weiterhin das gesamte "Netz" bedient werden kann.

Ebenfalls denkbar ist, dass die Nutzung von Straßen mit häufig komplexen Fahrsituationen (hohe Geschwindigkeit auf Autobahnen oder vielspurige innerstädtische Kreuzungen) gemieden wird, jedoch die Fahrt innerhalb leicht zu beherrschender ODDs (z.B. die Rückkehr zum Service-Hub) in jedem Fall möglich ist.

Bei einem bevorzugten Verfahren ist die Fehlerart ausgewählt aus einer Gruppe von Fehlerarten, welche einen Ausfall und/oder eine Einschränkung einer Elektronikkomponente, einen Ausfall wenigstens einer Sensoreinrichtung, einen Wegfall von Sensorsignalen wenigstens einer Sensoreinrichtung, eine Einschränkung und/oder ein Ausfall einer Recheneinheit, ein Ausfall einer Schnittstelle zu dem Fahrzeug und dergleichen sowie Kombinationen hiervon umfasst. Dies bietet den Vorteil, dass in Abhängigkeit der ermittelten Fehlerart eine verschiedene Kompensationsfunktion ermittelt werden kann.

Bei einem weiter bevorzugten Verfahren ist bzw. wird im Normalbetrieb, also insbesondere bei unverminderter Leistungsfähigkeit der Recheneinrichtung, eine Auslastung aller Komponenten der Recheneinrichtung, insbesondere der Recheneinheiten, im Wesentlichen gleichverteilt. Dies bietet den Vorteil, dass in einem Normalbetrieb die vorhandenen Ressourcen gleichermaßen genutzt werden. Insbesondere kann die vorhandene Leistungsfähigkeit der gesamten Recheneinrichtung genutzt werden. Durch die Ausnutzung der Rechenressourcen aller Recheneinheiten kann vorteilhaft die gesamte, im Fahrzeug vorhandene Leistungsfähigkeit der Recheneinheiten kleiner ausgelegt und hierdurch können Ressourcen eingespart werden.

Bei einem weiter bevorzugten Verfahren wird bei Feststellung einer auftretenden Leistungsminderung einer Recheneinheit der Recheneinrichtung eine Rekonfiguration der Datenströme zu einer verbleibenden Recheneinheit, deren Leistungsfähigkeit bevorzugt nicht oder zumindest nicht vollständig vermindert ist, vorgenommen. Insbesondere kann bei einem Ausfall einer Schnittstelle einer Recheneinheit zum Fahrzeug eine Rekonfiguration zu einer hiervon verschiedenen Recheneinheit der Recheneinrichtung mit funktionsfähiger Schnittstelle zum Fahrzeug erfolgen.

Bei einem weiter bevorzugten Verfahren wird wenigstens eine vorgegebene Anwendungsgrenze (ODD, Abkürzung für "Operational Design Domain") für eine Zulässigkeit einer wenigstens teilweise automatischen und bevorzugt vollautomatischen Ausführung einer Kompensationsfunktion und/oder eine Fahrzeugfunktion in Abhängigkeit der Leistungsgröße und/oder der Fehlergröße verändert und/oder angepasst. Damit wird vorteilhaft festgelegt, in welchem Umfang eine Fahrzeugfunktion bzw. deren Kompensationsfunktion noch ausführbar ist.

Bei der Anwendungsgrenze kann es sich dabei um vorgegebene Umweltbedingungen (Witterung), Straßenverhältnisse, Umfeldbedingungen (Stärke des Verkehrsaufkommens, Art der Fahrbahn (Schnellstraße, Überlandstraße, innerstädtischer Verkehr, verkehrsberuhigter Bereich), (insbesondere nutzerspezifischer) Fahrmodus bzw. Fahrprofil, Maximalgeschwindigkeit, für die Erfüllung der Fahrfunktionen gewählte Fahrbahntypen und dergleichen handeln.

So kann beispielsweise festgelegt werden, ob ein (etwa nutzerspezifisch gewählter) Komfort-Fahrmodus noch angeboten werden kann bzw. noch durchführbar ist. Im Rahmen eines derartigen Komfort-Fahrmodus werden üblicherweise an dem Fahrgestell einzustellende Federhärten vor Erreichen einer prognostizierten Fahrsituation (etwa starke Kurve) (von der Recheneinrichtung) ermittelt, um dem Nutzer ein möglichst komfortables Fahrerlebnis zu ermöglichen. Eine derartige Prognose erfordert das Erfassen einer zukünftig stattfindenden Fahrsituation sowie eine Ermittlung einer Reaktion des Fahrzeugs zur Abmilderung von hiervon hervorgerufenen, auf den Nutzer des Fahrzeugs wirkenden Kräften.

Durch Änderung der Anwendungsgrenzen derart, dass kein derartiger Fahrmodus mehr bereitgestellt wird, kann Rechenkapazität eingespart werden und hierdurch eine Leistungsminderung der Recheneinrichtung abgemildert bzw. ausgeglichen werden.

Bei einem weiter bevorzugten Verfahren umfasst die Kompensationsfunktion einen Betrieb des Fahrzeugs bei verringerter Abtastrate wenigstens einer Sensoreinrichtung und bevorzugt mehrerer Sensoreinrichtungen. Denkbar ist, dass beispielsweise die Abtastrate im Vergleich zu einem Normalbetrieb um wenigstens ein Drittel und bevorzugt um (wenigstens oder im Wesentlichen) die Hälfte verringert ist. Dies bietet den Vorteil, dass der Rechenaufwand zum Auswerten und Verarbeiten der Sensordaten erheblich reduziert wird. Beispielsweise kann die Abtastrate (bevorzugt ausgehend von einer Abtastrate von 20 Hz) auf eine Abtastrate von maximal 10 Hz und besonders bevorzugt maximal 5 Hz reduziert werden.

Bei der Sensoreinrichtung, welche mit verringerter Abtastrate betrieben und/oder ausgewertet wird, kann es sich um eine Sensoreinrichtung zur Erfassung ortsaufgelöster Sensordaten (insbesondere Umfelddaten), bevorzugt eine (Front-)Kamera und/oder Rückkamera und/oder einen LI DAR und/oder RADAR-Sensor handeln. Besonders bei der Erfassung ortsaufgelöster Sensordaten sind zu deren Auswertung bzw. Verarbeitung vergleichsweise hohe Rechenressourcen erforderlich. Bei einer Verringerung deren Abtastrate kann daher die Rechnerauslastung deutlich reduziert werden.

Bei einem weiter bevorzugten Verfahren umfasst die Kompensationsfunktion einen Betrieb des Fahrzeugs bei verringerter Maximalgeschwindigkeit des Fahrzeugs. Bevorzugt ist hierdurch eine Verarbeitung kleinerer Datenmengen erforderlich, da bei kleineren Maximalgeschwindigkeiten eine weniger weite (aktive) Vorausschau vorgesehen werden muss.

Daneben ist vorteilhaft bei verringerter Maximalgeschwindigkeit eine kleinere Abtastrate der Sensoreinrichtung(en) (insbesondere zur Erfassung des Fahrzeugumfelds) erforderlich. Auch hierdurch kann die erforderliche Rechenleistung reduziert und hierdurch die Leistungsminderung wenigstens teilweise ausgeglichen werden.

Denkbar ist beispielsweise, dass die Maximalgeschwindigkeit auf 100 km/h, bevorzugt auf 80 km/h und besonders bevorzugt auf 60 km/h reduziert wird. Eine Verringerung der Maximalgeschwindigkeit erfolgt bevorzugt in Abhängigkeit der (ermittelten) Leistungsgröße.

Bevorzugt ist die Sensoreinrichtung (des Fahrzeugs) ausgewählt aus einer Gruppe von Sensoren, welche eine (Farb-)Kamera, eine Frontkamera, eine Rückkamera, einen Infrarot-Kamera, LI DAR (Abkürzung für Light detection and ranging oder Light imaging, detection and ranging), Radar, Ultraschallsensoren und dergleichen sowie Kombinationen hiervon umfasst. Bevorzugt erzeugt die Sensoreinrichtung zur Erfassung eines Fahrzeugumfelds örtlich aufgelöste (insbesondere 2D- und/oder 3D-) Sensordaten (von einem Fahrzeugumfeld des Fahrzeugs).

Bei einem weiter bevorzugten Verfahren umfasst die Kompensationsfunktion einen Betrieb des Fahrzeugs mit wenigstens einer eingeschränkten Sensoreinrichtung. Denkbar ist, dass beispielsweise die Anzahl an zur Ausführung der Kompensationsfunktion verwendeten Sensoreinrichtungen reduziert wird. Beispielsweise könnte anstelle einer Verwendung einer Frontkamera und eines LIDAR-Sensors (zur Erfassung des Fahrzeugumfelds) lediglich die Frontkamera verwendet werden. Daneben könnte(n) zur Erfassung des Fahrzeugumfelds ausschließlich Kamera- und/oder Ultraschall-basierte Sensoreinrichtungen und insbesondere keine Laser-basierten Sensoreinrichtungen verwendet werden.

Dabei kann das Fahrzeug wenigstens mittelbar und bevorzugt unmittelbar mit wenigstens einem weiteren Fahrzeug und/oder einer Infrastruktureinrichtung in einer Kommunikationsverbindung stehen (z.B. über Car2Car-Kommunikation, C2C-Kommunikation und/oder Car2x-Kommunikation und/oder Car2l-Kommunikation).

Dabei kann das Fahrzeug über die Kommunikationsverbindung wenigstens eine zur Erfüllung der Fahrzeugfunktionsaufgabe charakteristische Verkehrssituationsgröße wenigstens mittelbar (über andere Verkehrsteilnehmer oder Infrastruktur) und bevorzugt unmittelbar von wenigstens einem weiteren Fahrzeug oder einer Infrastruktureinrichtung empfangen.

Die Verkehrssituationsgröße kann dabei charakteristisch sein für eine Stärke eines Verkehrsaufkommens entlang einer beabsichtigten Trajektorie des Fahrzeugs. Denkbar ist, dass es sich bei der Verkehrssituationsgröße beispielsweise um Staudaten und/oder Verkehrsdaten in Bezug auf einen lokalen (Innenstadt-)Bereich insbesondere entlang der beabsichtigten (Kompensations-)Trajektorie handelt.

Denkbar ist auch, dass die Verkehrssituationsgröße anzeigt, ob Fußgänger entlang wenigstens eines Abschnitts der (Kompensations-)Trajektorie zu erwarten sind. Denkbar ist, dass im Falle einer zu erwartenden Anwesenheit von Fußgängern eine verschiedene Trajektorie gewählt wird, da sich üblicherweise Verkehrssituationen mit Beteiligung von Fußgängern (insbesondere zur Sicherstellung einer hohen Sicherheit), welche insbesondere in belebten und/oder innerstädtischen Bereichen von weiteren Objekten wenigstens teilweise verdeckt sein können (etwa Kinder zwischen parkenden Autos), als vergleichsweise rechenintensiv darstellen.

Bevorzugt kann die Kompensationsfunktion auf Grundlage der empfangenen, charakteristischen Verkehrssituationsgröße ermittelt und/oder wenigstens eine Anwendungsgrenze festgelegt werden.

Bevorzugt kann die Kompensationsfunktion auf Grundlage von auf einer Speichereinrichtung des Fahrzeugs abgelegter historischer (Fahr-)Daten und/oder auf Grundlage von Schwarmdaten (einer Vielzahl verschiedener Fahrzeuge) ermittelt werden. Hierbei kann etwa auf Grundlage der historischen (Fahr-)Daten und/oder auf Grundlage von Schwarmdaten ermittelt werden, welche Leistungsfähigkeit zur Durchführung einer vorgegebenen Fahrzeugfunktion (statistisch und/oder durchschnittlich und/oder üblicherweise und/oder in Abhängigkeit von einer vorgegebenen Tageszeit), insbesondere mindestens und/oder maximal, erforderlich ist. Hierdurch kann abgeschätzt werden, ob die angefallene Fahrzeugfunktion noch durchführbar ist bzw. welche Kompensationsfunktionen (ersatzweise) durchführbar wären.

Bevorzugt handelt es sich bei der Fahrzeugfunktion um eine Funktion einer Fahrzeugkomponente des Fahrzeugs. Bevorzugt ist die Fahrzeugkomponente ausgewählt aus einer Gruppe, welche ein Fahrzeugsicherheitssystem (beispielsweise ein Bremssystem), ein System zum Führen des Fahrzeugs, eine insbesondere automatische Fahrzeuglateralsteuerung, ein Spur-Einhaltesystem, ein Spurwechsel-Assistenzsystem, ein Navigationssystem, ein Verriegelungssystem einer Fahrzeugtür und/oder eines Fahrzeugfensters, einen Scheibenwischermechanismus, ein Fahrzeugschließsystem, ein Infotainmentsystem, ein Unterhaltungssystem und/oder ein Komfortsystem zur Steigerung des Fahrkomforts eines Insassen und Kombinationen hiervon umfasst.

Die vorliegende Erfindung ist weiterhin gerichtet auf eine Kompensationsvorrichtung für ein Fahrzeug zur Kompensation einer auftretenden Leistungsminderung einer, insbesondere zentralen, Recheneinrichtung eines Fahrzeugs, mithilfe derer eine anfallende Fahrzeugfunktion zur Erfüllung einer Fahrzeugfunktionsaufgabe wenigstens teilweise automatisch und bevorzugt vollautomatisch ausführbar ist.

Dabei umfasst die, insbesondere zentrale, Recheneinrichtung wenigstens eine Recheneinheit und bevorzugt eine Vielzahl von Recheneinheiten. Bevorzugt kann die Recheneinheit und besonders bevorzugt kann die Vielzahl an Recheneinheiten ausgeführt sein als (einzelne oder mehrere) physikalische Steuergeräte, als (einzelne oder mehrere) physikalische Chips innerhalb eines Steuergeräts oder als einzelne Prozessoren oder Chiplets innerhalb eines Chips.

Dabei ist die, insbesondere zentrale Recheneinrichtung, zur Datenverarbeitung von mittels einer Vielzahl von Sensoreinrichtungen des Fahrzeugs ermittelten Sensordaten geeignet und bestimmt. Weiterhin ist die, insbesondere zentrale Recheneinrichtung, dazu geeignet und bestimmt, auf Grundlage der Sensordaten wenigstens eine Steuergröße zur, wenigstens teilweisen automatischen und bevorzugten vollautomatischen, Ausführung der Fahrzeugfunktion, insbesondere Fahrfunktion, des Fahrzeugs zu ermitteln.

Dabei weist das Fahrzeug eine Überwachungseinheit zur Überwachung einer Leistungsfähigkeit der Recheneinrichtung zur Feststellung einer auftretenden Leistungsminderung der Recheneinrichtung auf, welche dazu geeignet und bestimmt ist, im Falle einer auftretenden Leistungsminderung, wenigstens eine Leistungsgröße, welche charakteristisch ist für eine noch vorhandene Leistungsfähigkeit der Recheneinrichtung, und wenigstens eine Fehlergröße, welche charakteristisch ist für eine, die Leistungsminderung der Recheneinrichtung betreffende Fehlerart, zu ermitteln.

Erfindungsgemäß ist die Kompensationsvorrichtung dazu geeignet und bestimmt, bei Gefährdung der Erfüllung der Fahrzeugfunktionsaufgabe, wenigstens eine Kompensationsfunktion zur ersatzweisen Ausführung anstelle der Fahrzeugfunktion auf Grundlage der wenigstens einen ermittelten Leistungsgröße und/oder der wenigstens einen Fehlergröße und auf Grundlage der zu erfüllenden Fahrzeugfunktionsaufgabe zu ermitteln.

Mit anderen Worten ermittelt die Recheneinrichtung eine Kompensationsfunktion, welche das Fahrzeug anstelle der Fahrzeugfunktion ausführen soll. Dabei ist die Kompensationsfunktion bevorzugt derart gewählt, dass eine Erfüllung von der (ursprünglichen)
Fahrzeugfunktionsaufgabe durch die Kompensationsfunktion - wenigstens teilweise und bevorzugt vollständig - ermöglicht wird.

Es wird also auch im Rahmen der erfindungsgemäßen Kompensationsvorrichtung vorgeschlagen, dass als, insbesondere zentrale Recheneinrichtung, eine kombinierte Haupt- und BackUp-Rechner-Einheit vorgesehen ist, welche sowohl in einem Gerät als auch in mehreren Geräten, welche mit hoher Bandbreite (zum Datenaustausch) verbunden sind, umgesetzt sein können.

Bevorzugt ist die Kompensationsvorrichtung dazu eingerichtet, geeignet und/oder bestimmt, das obig beschriebene Verfahren sowie alle bereits obig im Zusammenhang mit dem Verfahren beschriebene Verfahrensschritte einzeln oder in Kombination miteinander auszuführen. Umgekehrt kann das Verfahren mit allen im Rahmen der Kompensationsvorrichtung beschriebenen Merkmalen einzeln oder in Kombination miteinander ausgestattet sein.

Die vorliegende Erfindung ist weiterhin gerichtet auf ein Fahrzeug, insbesondere Kraftfahrzeug, umfassend eine obig beschriebene Kompensationsvorrichtung für ein Fahrzeug entsprechend einer Ausführungsform. Bei dem Fahrzeug kann es sich insbesondere um ein (motorisiertes) Straßenfahrzeug handeln.

Bei einem Fahrzeug kann es sich um ein Kraftfahrzeug handeln, welches insbesondere ein von dem Fahrer selbst gesteuertes Kraftfahrzeug ("Driver only"), ein halbautonomes, autonomes (beispielsweise der Autonomiestufe Level 3 oder 4 oder 5 (der Norm SAE J3016)) oder selbstfahrendes Kraftfahrzeug ist. Die Autonomiestufe Level 5 bezeichnet dabei vollautomatisch fahrende Fahrzeuge. Ebenso kann es sich bei dem Fahrzeug um ein fahrerloses Transportsystem handeln. Das Fahrzeug kann dabei von einem Fahrer gesteuert werden oder autonom fahren. Darüber hinaus kann es sich bei dem Fahrzeug neben einem Straßenfahrzeug auch um ein Flugtaxi, ein Flugzeug und ein anderes Fortbewegungsmittel oder eine andere Fahrzeugart handeln, beispielsweise ein Luft-, Wasser- oder Schienenfahrzeug.

Die vorliegende Erfindung ist weiterhin gerichtet auf ein Computerprogramm oder Computerprogrammprodukt, umfassend Programmmittel, insbesondere einen Programmcode, welcher zumindest einige der und bevorzugt alle Verfahrensschritte des erfindungsgemäßen Verfahrens und bevorzugt eine der beschriebenen bevorzugten Ausführungsformen repräsentiert oder kodiert und zum Ausführen durch eine Prozessoreinrichtung ausgebildet ist. Die vorliegende Erfindung ist weiterhin gerichtet auf einen Datenspeicher, auf welchem zumindest eine Ausführungsform des erfindungsgemäßen Computerprogramms oder einer bevorzugten Ausführungsform des Computerprogramms gespeichert ist.

Weitere Vorteile und Ausführungsformen ergeben sich aus den beigefügten Zeichnungen:
Darin zeigen:
- Fig. 1: eine schematische Darstellung eines Fahrzeugs mit einer Recheneinrichtung und einer Kompensationsvorrichtung gemäß einer bevorzugten Ausführungsform;
- Fig. 2: eine Darstellung kombinierter Recheneinheiten einer Recheneinrichtung gemäß einer bevorzugten Ausführungsform;
- Fig. 3: eine Veranschaulichung der Vorgehensweise des erfindungsgemäßen Verfahrens gemäß einer bevorzugten Ausführungsform; und
- Fig. 4: ein Verlaufsdiagramm eines erfindungsgemäßen Verfahrens gemäß einer bevorzugten Ausführungsform.

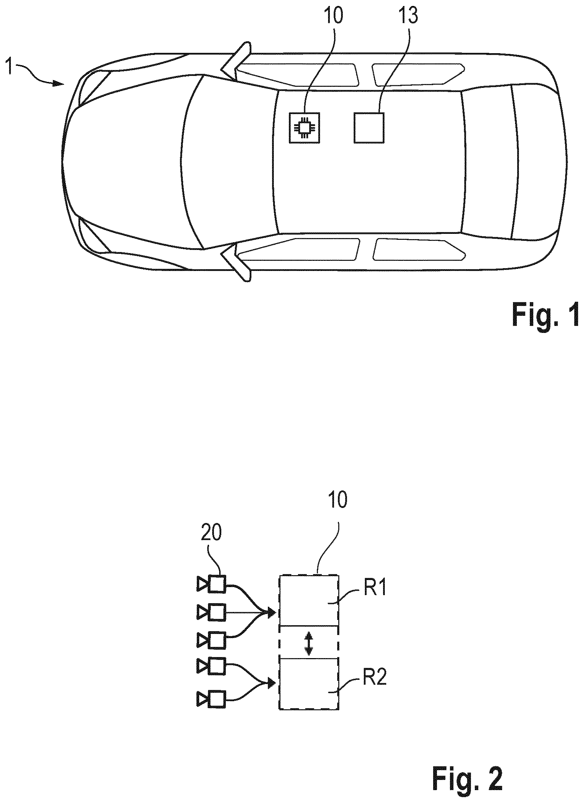

Fig. 1 zeigt eine schematische (Übersichts-)Darstellung eines Fahrzeugs 1 mit einer erfindungsgemäßen, insbesondere zentralen, Recheneinrichtung 10 sowie einer Kompensationsvorrichtung 12 für das Fahrzeug 1.

Fig. 2 zeigt eine Darstellung kombinierter Recheneinheiten R1, R2 (einer insbesondere zentralen Recheneinrichtung 10) mit hoher Bandbreite zur Verbindung, welche sowohl einzeln als auch getrennt verbaubar sind. Angeschlossene Sensoren bzw. Sensoreinrichtungen 20 (und gleichzeitig auch analog ausgeführte Fahrzeugschnittstellen) ermöglichen jeweils die Weiterverwendung in eingeschränkten ODDs.

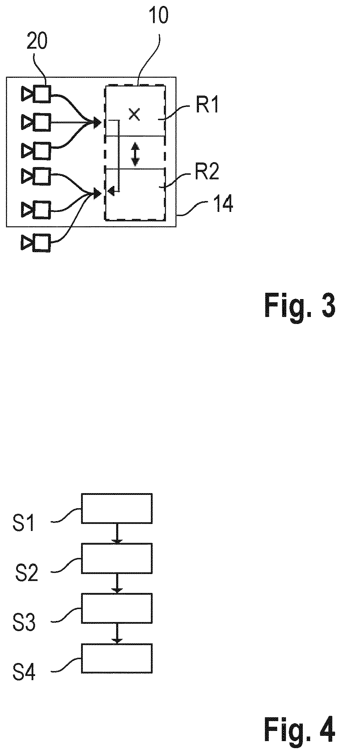

Fig. 3 zeigt anhand eines Fallbeispiels (Fehlerdiagnose Recheneinheit) die dem erfindungsgemäßen Verfahren gemäß einer Ausführungsform zugrundeliegende Vorgehensweise ausführlicher.

Wie Fig. 3 zu entnehmen ist, kann durch spezielle vorgehaltene Chips (welche bereits serienmäßig notwendige Überwachungsfunktionen bieten) innerhalb einer gewählten Überwachungsgrenze 14 ein Ausfall oder eine Leistungsminderung mindestens einer Recheneinheit erkannt werden.

Demgemäß wird eine zum Fehlerfall passende Kompensationsmethode gewählt und umgesetzt (z.B. durch eine Rekonfiguration von Datenströmen einzelner Sensoren).

Falls notwendig (und davon ist auszugehen) wird die ODD (ODD Abkürzung für sogenannte "Operational Design Domain", Ausdruck für Anwendungsgrenzen, innerhalb derer eine Ausführung einer wenigstens teilweise automatischen und bevorzugt vollautomatischen Fahrzeugfunktion zulässig ist), also insbesondere befahrbare Räume, Fahrprofil etc., angepasst. Beispielhaft sei die Reduktion der Maximalgeschwindigkeit bedingt durch geringere Abtastraten der Sensoren genannt.

Die Recheneinheiten können ausgeführt sein als
1. Einzelne (mehrere) physikalische Steuergeräte
2. Einzelne (mehrere) physikalische Chips innerhalb eines Steuergerätes
3. Einzelne Prozessoren/oder Chiplets innerhalb eines Chips

Fig. 4 zeigt ein Verlaufsdiagramm eines erfindungsgemäßes Verfahrens gemäß einer bevorzugten Ausführungsform nachfolgende Verfahrensschritte:
Bevorzugt wird, besonders bevorzugt kontinuierlich, die Leistungsfähigkeit einer Recheneinrichtung 10 und/oder einer Recheneinheit R1, R2, überwacht (insbesondere durch eine Überwachungseinheit 12).

Insbesondere bei der Überwachung kann sich eine Detektion eines
Ausfalls/Leistungsminderung der Recheneinheit R1 ergeben (wie in Fig. 3 durch das Kreuz-Symbol veranschaulicht). Eine solche Detektion ist in Fig. 4 mit dem Bezugszeichen S1 gekennzeichnet. Dabei ist bevorzugt die zweite Recheneinheit R1 uneingeschränkt leistungsfähig.

In einem bevorzugt hieran anschließenden Verfahrensschritt S2 wird eine Kompensationsmethode, bevorzugt durch durch die Überwachungseinheit 12 entworfen.

In einem weiteren, bevorzugt hieran anschließenden, Verfahrensschritt S3 erfolgt bevorzugt eine Rekonfiguration der Datenströme zu der verbleibenden Recheneinheit R2 (bevorzugt durch die Überwachungseinheit 12).

In einem weiteren, bevorzugt hieran anschließenden, Verfahrensschritt S4 wird die ODD (Operational Design Domain) gemäß der ganzheitlich vorhandenen Rechenleistung angepasst (etwa auf Grundlage der ermittelten Leistungsgröße). Beispielsweise kann dies durch eine geringere Abtastrate erfolgen. Wird eine geringere Abtastrate gewählt, impliziert dies bevorzugt eine geringere Maximalgeschwindigkeit (des Fahrzeugs).

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

### Bezugszeichenliste

- 1: Fahrzeug
- 10: Recheneinrichtung
- 12: Überwachungseinheit
- 14: Überwachungsgrenze
- 20: Sensoreinrichtung
- R1, R2: Recheneinheit
- S1 - S4: Verfahrensschritte

## Patentansprüche

1. Verfahren zur Kompensation einer auftretenden Leistungsminderung einer, insbesondere zentralen, Recheneinrichtung (10) eines Fahrzeugs (1), mithilfe derer eine anfallende Fahrzeugfunktion zur Erfüllung einer Fahrzeugfunktionsaufgabe wenigstens teilweise automatisch und bevorzugt vollautomatisch ausführbar ist und/oder ausgeführt wird und welche wenigstens eine Recheneinheit (R1, R2) und bevorzugt eine Vielzahl von Recheneinheiten (R1, R2) umfasst und zur Datenverarbeitung von mittels einer Vielzahl von Sensoreinrichtungen (20) des Fahrzeugs (1) ermittelten Sensordaten geeignet und bestimmt ist, und welche auf Grundlage der Sensordaten zur Ermittlung wenigstens einer Steuergröße zur, wenigstens teilweisen automatischen und bevorzugten vollautomatischen, Ausführung der Fahrzeugfunktion, insbesondere Fahrfunktion, des Fahrzeugs (1) geeignet und bestimmt ist, umfassend:
- Überwachen einer Leistungsfähigkeit der Recheneinrichtung (10) zur Feststellung einer auftretenden Leistungsminderung der Recheneinrichtung (10) und im Falle einer auftretenden Leistungsminderung, Ermittlung wenigstens einer Leistungsgröße, welche charakteristisch ist für eine noch vorhandene Leistungsfähigkeit der Recheneinrichtung (10), und Ermittlung wenigstens einer Fehlergröße, welche charakteristisch ist für eine, die Leistungsminderung der Recheneinrichtung (10) betreffende Fehlerart;
- Bei Gefährdung der Erfüllung der Fahrzeugfunktionsaufgabe, Ermittlung wenigstens einer Kompensationsfunktion zur ersatzweisen Ausführung anstelle der Fahrzeugfunktion auf Grundlage der wenigstens einen ermittelten Leistungsgröße und/oder der wenigstens einen Fehlergröße und auf Grundlage der zu erfüllenden Fahrzeugfunktionsaufgabe.

2. Verfahren nach Anspruch 1, **dadurch gekennzeichnet, dass** die Fehlerart ausgewählt ist aus einer Gruppe von Fehlerarten, welche einen Ausfall und/oder eine Einschränkung einer Elektronikkomponente, einen Ausfall wenigstens einer Sensoreinrichtung (20), einen Wegfall von Sensorsignalen wenigstens einer Sensoreinrichtung (20), eine Einschränkung und/oder ein Ausfall einer Recheneinheit (R1, R2), ein Ausfall einer Schnittstelle zu dem Fahrzeug (1) und dergleichen sowie Kombinationen hiervon umfasst.

3. Verfahren nach einem der vorhergehenden Ansprüche, **dadurch gekennzeichnet, dass** im Normalbetrieb bei unverminderter Leistungsfähigkeit der Recheneinrichtung (10) eine Auslastung aller Komponenten der Recheneinrichtung (10), insbesondere der Recheneinheiten (R1, R2), im Wesentlichen gleichverteilt ist und/oder wird.

4. Verfahren nach einem der vorangegangenen Ansprüche, **dadurch gekennzeichnet, dass** bei Feststellung einer auftretenden Leistungsminderung einer Recheneinheit (R1) der Recheneinrichtung (10) eine Rekonfiguration der Datenströme zu einer verbleibenden Recheneinheit (R2) vorgenommen wird.

5. Verfahren nach einem der vorangegangenen Ansprüche, **dadurch gekennzeichnet, dass** wenigstens eine vorgegebene Anwendungsgrenze (ODD) für eine Zulässigkeit einer wenigstens teilweise automatischen und bevorzugt vollautomatischen Ausführung einer Kompensationsfunktion und/oder eine Fahrzeugfunktion in Abhängigkeit der Leistungsgröße und/oder der Fehlergröße verändert wird.

6. Verfahren nach einem der vorangegangenen Ansprüche, **dadurch gekennzeichnet, dass** die Kompensationsfunktion einen Betrieb des Fahrzeugs (1) bei verringerter Abtastrate wenigstens einer Sensoreinrichtung (20) umfasst.

7. Verfahren nach einem der vorangegangenen Ansprüche, **dadurch gekennzeichnet, dass** die Kompensationsfunktion einen Betrieb des Fahrzeugs (1) bei verringerter Maximalgeschwindigkeit des Fahrzeugs (1) umfasst.

8. Kompensationsvorrichtung (13) für ein Fahrzeug (1) zur Kompensation einer auftretenden Leistungsminderung einer, insbesondere zentralen,
Recheneinrichtung (10) eines Fahrzeugs (1), mithilfe derer eine anfallende Fahrzeugfunktion zur Erfüllung einer Fahrzeugfunktionsaufgabe wenigstens teilweise automatisch und bevorzugt vollautomatisch ausführbar ist und welche wenigstens eine Recheneinheit (R1, R2) und bevorzugt eine Vielzahl von Recheneinheiten (R1, R2) umfasst und zur Datenverarbeitung von mittels einer Vielzahl von Sensoreinrichtungen (20) des Fahrzeugs (1) ermittelten Sensordaten geeignet und bestimmt ist, und welche auf Grundlage der Sensordaten zur Ermittlung wenigstens einer Steuergröße zur, wenigstens teilweisen automatischen und bevorzugten vollautomatischen, Ausführung der Fahrzeugfunktion, insbesondere Fahrfunktion, des Fahrzeugs (1) geeignet und bestimmt ist, wobei das Fahrzeug (1) eine Überwachungseinheit zur Überwachung einer Leistungsfähigkeit der Recheneinrichtung (10) zur Feststellung einer auftretenden Leistungsminderung der Recheneinrichtung (10) aufweist, welche dazu geeignet und bestimmt ist, im Falle einer auftretenden Leistungsminderung, wenigstens eine Leistungsgröße, welche charakteristisch ist für eine noch vorhandene Leistungsfähigkeit der
Recheneinrichtung (10) und wenigstens eine Fehlergröße, welche charakteristisch ist für eine, die Leistungsminderung der Recheneinrichtung (10) betreffende Fehlerart zu ermitteln, **dadurch gekennzeichnet, dass** die Kompensationsvorrichtung (13) dazu geeignet und bestimmt ist, bei Gefährdung der Erfüllung der Fahrzeugfunktionsaufgabe, wenigstens eine Kompensationsfunktion zur ersatzweisen Ausführung anstelle der Fahrzeugfunktion auf Grundlage der wenigstens einen ermittelten Leistungsgröße und/oder der wenigstens einen Fehlergröße und auf Grundlage der zu erfüllenden Fahrzeugfunktionsaufgabe zu ermitteln.

9. Kompensationsvorrichtung (13) nach dem vorangegangenen Anspruch, wobei es sich bei der Recheneinheit (R1, R2) um wenigstens ein physikalisches Steuergerät des Fahrzeugs (1), wenigstens einen physikalischen Chip innerhalb eines Steuergeräts des Fahrzeugs (1) und/oder wenigstens einen Prozessor und/oder Chiplet innerhalb eines Chips des Fahrzeugs (1) handelt.

10. Fahrzeug (1), insbesondere Kraftfahrzeug, umfassend eine
Kompensationsvorrichtung (10) gemäß Anspruch 8 und/oder Anspruch 9.
